# EUROPEAN PATENT APPLICATION

(11) **EP 4 489 333 A1**
(43) Date of publication of application: **08.01.2025**
(21) Application number: 23183219.7
(22) Date of filing: 04.07.2023
(51) Int. Cl.: H04L 1/00, H04L 1/08, H04L 1/22, H04L 43/0823, H04L 45/24, H04L 69/14

(54) **ETHERNET DEVICE AND METHOD FOR RELIABLE REDUNDANT COMMUNICATION LINKS IN SAFETY CRITICAL APPLICATIONS**

(71) Applicant: Siliconally GmbH, 01067 Dresden (DE)
(72) Inventor: SCHONLAU, Benedikt, 09112 Chemnitz (DE); KÖGEL, Elias, 01187 Dresden (DE); HÖPPNER, Sebastian, 01159 Dresden (DE); NEUMÄRKER, Felix, 01067 Dresden (DE); ONAT, Emrah, 01069 Dresden (DE)
(74) Representative: Lippert Stachow Patentanwälte Rechtsanwälte Partnerschaft mbB

(57) **Abstract**

The invention relates to an ethernet device (100, 200) and method for a bi-directional data transfer between two ethernet devices (100, 200), comprising:
at least a first ethernet physical layer access device (110, 210);
a message generator (180, 280) for generating a data transmission intent message for each data package to be transmitted by the ethernet device (100, 200);
a check unit (150, 250) for comparing received data packages with corresponding data transmission intent messages;
wherein the ethernet device (100, 200) transmits the data transmission intent message and the corresponding data package separately via at least one communication link (120, 140);
wherein the check unit (150, 250) detects a safety problem of at least one communication link (120, 140) if the data package is received without the corresponding data transmission intent message within a specified time interval or vice versa.

## Description

The invention relates to an ethernet device, particularly for reliable communication links in safety critical applications. The invention further relates to a method for a bi-directional data transfer between two ethernet devices, particularly for reliable communication links in safety critical applications.

The ethernet devices provide connectivity features at the physical layer. The invention particularly relates to detecting faults on the bi-directional data transfer between two ethernet devices, wherein at least one of the two ethernet devices is an ethernet device according to the present invention.

The invention is advantageous for the technical field of automotive ethernet connectivity, as for example defined in IEEE Std. 802.3TM-2018 - IEEE Standard for Ethernet. Particularly, the invention relates to reliable communication links for safety critical applications in cars. In such applications failure modes of data transmission must be prevented, which are for example loss of communication peer, message corruption, message unacceptable delay, message loss, unintended message repetition, incorrect sequencing of messages, message insertion, message masquerading or similar failures (see for example ISO 26262-5:2018€ Annex D.1).

Faults shall be detected within a low fault detection time interval (FDTI) and to be handled within a short Fault Handling Time Interval (FHTI), which brings the system to a safe state. The safe state is ideally safe operational, in the sense that data communication of safety critical communication links is still possible in case of a failure. This is important for applications like drive-by-wire or brake-by-wire.

From the prior art it is known to provide end-to-end protection of ethernet data transfers on the OSI (Open Systems Interconnection model) application layer. For example, AUTOSAR E2E Protocol Specification discloses end-to-end data protection for sending data from one node to another node by attaching a checksum generated by the application layer to the payload data, before sending the payload data. The receiving application receives the payload data including the checksum and checks the data integrity before using the data by calculating the checksum for the received payload data and comparing this calculated checksum with the received checksum attached to payload data. This approach has the advantage that the full communication chain of data between two applications is covered. For example, if a data package gets corrupted within an ECU (Electronic Control Unit) or even inside one processor due to a lack of failure mechanisms (e.g., ECC (Error Correcting Code) memory), the application can check the integrity of each data package. This approach has the disadvantage that the application can only detect an integrity issue, but not the reason for the integrity issue. Another disadvantage is that the receiver part of the chain can only detect the failure if the receiving nodes receives any data, and the sender cannot find out anything at all. Safety mechanisms for event-based messages are not possible at all, because an application has no prediction, when to receive a message.

Additionally, random failures can occur. The application cannot switch to a degradation mode after one or two corrupted packages because it could be a random failure. For CAN-based (Controller Area Network) communication it is common to accept up to 10 corrupted packages before going into any degradation mode. For a message, that is received cyclically in 50 ms cycle time, a degradation mode can earliest be started after 500 ms, which can be problematic for safety critical communication links.

"Standard for Local and Metropolitan Area Networks-Frame Replication and Elimination for Reliability" defines the replication of ethernet frames at higher layers of the OSI model to allow for redundancy. It does not define the channel itself over which the redundant frames are transmitted.

CN111277480B proposes a method to discard repeated frames of a high-availability seamless redundant ring network by caching two paths of Ethernet data respectively; sequencing the cached Ethernet data according to a FIFO principle; analyzing the sorted data and performing repeated frame discarding judgment on adjacent data according to an analysis result. However, this has the drawback that if there is a loss packet between these two same packets, the system will discard one of the packets that should not be discarded because of lack of detection packet loss in the system.

US5229994A discloses an asynchronous time-division multiplex telecommunication network data transmission protocol to detect transmission errors by means of cyclic redundancy check bits. It can work properly if there is an error in the data packet. This mechanism does not work for different technical problems such as unintended message repetition, message insertion or full packet loss.

According to US6754238B1 a signal is generated by combining the control information with the data. Control information is transmitted within the interpacket gap that is temporally defined between said temporal packets of information. The method comprises receiving the combined signal and separating the control information from the data in the combined signal. If the combined signal loss or if it re-transmits accidentally, the receiver part could not recognize these types of errors. Besides, this mechanism includes only one channel. If there is a short or open on the channel, no combined signal could be received.

CN110493147B presents a solution to reduce software load and to improve system performance by using a parallel redundant channel. This mechanism comprises redundancy management method based on lookup table to manage the repeated frames and asynchronous data received by a redundancy port effectively solved. However, this method has the drawback if there is a message loss or massage insertion.

In order to achieve the purposes of simplifying the transmission circuit, improving the heat dissipation efficiency and ensuring the accuracy of the signal transmission, EP1988470B1 provides a network device and a transmission method thereof, which outputs access commands in packet intervals simultaneously with the output of a plurality of data packets for access registration. One command comprises data reading or writing of register of the network device. So, if there is a message loss or repetition the command will do its task for wrong data packet and finally order will be broken.

KR101106380B1 proposes a communication system comprising a communication network between at least two communication interfaces that are intended to enable the transfer of information between the controllers via a communication interface of the type such as modem, switch, bridge-relay, etc., for each controller, at least for other communication links such as common Ethernet, ADSL, WiFi, etc. It has one communication port. In the case of a point-to-point link failure, redundant links may be created by reconfiguring the governed router.

EP 2 460 319 B1 presents a solution for safety critical ethernet data transmission by using two redundant physical layers. The check of the channel health condition is done by loopback tests, where multiple levels of loopbacks are proposed on MAC (Media Access Control) and physical layer level. This has the drawback that additional loopback data must be send and the link is not operational during the loopback testing.

It is therefore an object of the present invention to provide reliable ethernet communication links between two ethernet devices, particularly for safety critical applications, which can detect message loss, message repetition, and other communication faults.

This object is solved by independent claims 1 and 11. Preferred embodiments of the invention are defined in the dependent claims.

The present invention relates to an ethernet device, particularly for reliable communication links in safety critical applications, comprising:
at least a first ethernet physical layer access device;
a message generator for generating a data transmission intent message for each data package to be transmitted by the ethernet device;
a check unit for comparing received data packages with corresponding data transmission intent messages;
wherein the ethernet device transmits the data transmission intent message and the corresponding data package separately via at least one communication link;
wherein the check unit detects a safety problem of the at least one communication link if the data package is received without the corresponding data transmission intent message within a specified time interval or if the data transmission intent message is received without the corresponding data package within the specified time interval.

The ethernet device according to the present invention can detect a message loss on the at least one communication link if the data package is received without the corresponding data transmission intent message within a specified time interval or if the data transmission intent message is received without the corresponding data package within the specified time interval. The ethernet device can further detect a message repetition if two identical data packages are received but only one corresponding data transmission intent message.

In a preferred variant of the invention, the ethernet device further comprises at least a second ethernet physical layer access device, wherein the first ethernet physical layer access device transmits data via a first communication link and the second ethernet physical layer access device transmits data via a second communication link. In this variant, the ethernet device transmits the data transmission intent message over either the first communication link or the second communication link and the data package over the other of the first communication link or the second communication link. Thus, the data package and the corresponding data transmission intent message are transmitted via two different communication links. The ethernet device can further detect a total loss of one of the at least two communication links if either data packages are received without corresponding data transmission intent messages or if data transmission intent messages are received without corresponding data packages.

Pursuant to a variant of the invention, the first communication link and/or the second communication link is disabled if the check unit detects a safety problem of the first communication link and/or the second communication link. Afterwards, the data transmission can still be continued via the remaining communication link. For example, after one of the communication links has been disabled, the data packages and the communication intent messages are transmitted both via the remaining communication link. Alternatively, only data packages are afterwards transmitted via the remaining communication link without the additional safety provided by the data transmission intent message.

According to a variant of the invention, the first ethernet physical layer access device comprises a first PCS/PMA unit for accessing the first ethernet channel, a first media independent interface port for ethernet data package transfer and/or a first medium access controller. Likewise, the second ethernet physical layer access device can comprise a second PCS/PMA unit for accessing the second ethernet channel, a second media independent interface port for ethernet data transmission intent transfer and/or a second medium access controller.

In an advantageous variant of the invention the data transmission intent message comprises an identification of the corresponding data package and/or a check sum of the corresponding data package. The identification of the corresponding data package is for example a unique number contained in the corresponding data package. Alternatively or additionally, the data transmission intent message comprises a check sum of the corresponding data package. The checksum can be used to identify corresponding data packages. Furthermore, using the checksum the ethernet device according to the present invention can further detect whether the data package has been corrupted during transmission or not. The data transmission intent message can further optionally comprise a sequential number, an error correction code and/or the full data payload of the corresponding data package. Using the sequential number, the ethernet device can detect out of order data packages and/or total losses of data packages and corresponding data transmission intent messages. For example, the sequential number is an integer, which increases by 1 for each data package. The optional error correction code can be used to correct corrupted data packages, like bit errors occurred during transmission. If the data transmission intent message comprises the full data payload of the corresponding data package the risk of a loss of data is reduced on cost of the connection load on the respective communication link.

Pursuant to a variant of the invention, wherein the check unit can detect corrupted data transmissions by comparing the check sum of the data transmission intent with the check sum of the received data package, detect missing data packages and/or missing data transmission intent messages on basis of missing sequential numbers and/or correct corrupted data based on the error correction code of the data transmission intent message.

According to a variant of the invention, the check unit calculates the first order statistics such as mean and standard deviation of the frequency of data packages and data transmission intents and checks these statistics to detect a safety problem if predefined statistics are not met. This is particularly useful for applications with regular data package transmissions. If the timing between consecutive data packages changes, this might be due to problems on the respective communication link. By calculating first order statistics, the check unit can detect such problems nearly in real time.

In a particularly preferred variant of the invention, the message generator generates the data transmission intent message for each data package to be transmitted by the ethernet device on the MAC layer or PHY layer of the transmitting ethernet device. Thus, the generation of the data transmission intent messages is independent of the higher levels of the OSI model, like e.g., the application layer, is automatically performed either on the MAC layer or PHY layer.

Pursuant to a variant of the invention, the check unit generates a safety signal for a safety controller using the ethernet device if it detects the safety problem of the at least one communication link. Thus, the safety controller using the ethernet device is aware of the safety problem of at least one communication link and can take respective counter measures, change to a safe operation mode, stop operation, or perform any other suitable action.

According to a variant of the invention, the ethernet device further defines a time interval between sequential data packages and/or sequential data transmission intent messages and the check unit can check if the defined time interval is exceeded. In this variant even time issues with respect to at least one communication link can be detected, which is particularly useful for automotive safety critical applications.

The object is further solved by a method for a bi-directional data transfer between two ethernet devices, particularly for reliable communication links in safety critical applications, according to claim 11, further comprising the steps of:
providing a first communication link between the two ethernet devices;
obtaining data packages at the ethernet devices to be transmitted via the first communication link;
generating a data transmission intent message at the ethernet device that obtained the data package;
separately transmitting the data transmission intent message and the data package via the first communication link to the other ethernet device;
receiving at the other ethernet device the data transmission intent and/or the data package via the first communication link;
detecting a safety problem of the first communication link if the data package is received without the corresponding data transmission intent message within a specified time interval or if the data transmission intent message is received without the corresponding data package within the specified time interval.

The method for a bi-directional data transfer between two ethernet devices according to the present invention can detect a message loss on the at least one communication link if the data package is received without the corresponding data transmission intent message within a specified time interval or if the data transmission intent message is received without the corresponding data package within the specified time interval. The method can further detect a message repetition if two identical data packages are received but only one corresponding data transmission intent message.

In a variant of the invention, the method further comprises the steps of:
providing a second communication link between the two ethernet devices;
transmitting the data transmission intent message over either the first communication link or the second communication link and the data package over the other of the first communication link or the second communication link.

Thus, the data package and the corresponding data transmission intent message are transmitted via two different communication links. The method can further detect a total loss of one of the at least two communication links if either data packages are received without corresponding data transmission intent messages or if data transmission intent messages are received without corresponding data packages.

Pursuant to a variant of the invention, the method comprises the additional step of disabling the first communication link and/or the second communication link if a safety problem of the first communication link and/or the second communication link is detected. Afterwards, the data transmission can still be continued via the remaining communication link. For example, after one of the communication links has been disabled, the data packages and the communication intent messages are transmitted both via the remaining communication link. Alternatively, only data packages are afterwards transmitted via the remaining communication link without the additional safety provided by the data transmission intent message.

In an advantageous variant of the invention the data transmission intent message comprises an identification of the corresponding data package and/or a check sum of the corresponding data package. The identification of the corresponding data package is for example a unique number contained in the corresponding data package. Alternatively or additionally, the data transmission intent message comprises a check sum of the corresponding data package. The checksum can be used to identify corresponding data packages. Furthermore, using the checksum the ethernet device according to the present invention can further detect whether the data package has been corrupted during transmission or not. The data transmission intent message can further optionally comprise a sequential number, an error correction code and/or the full data payload of the corresponding data package. Using the sequential number, the ethernet device can detect out of order data packages and/or total losses of data packages and corresponding data transmission intent messages. For example, the sequential number is an integer, which increases by 1 for each data package. The optional error correction code can be used to correct corrupted data packages, like bit errors occurred during transmission. If the data transmission intent message comprises the full data payload of the corresponding data package the risk of a loss of data is reduced on cost of the connection load on the respective communication link.

According to a variant of the invention, the method further comprises one or more of the following steps:
detecting corrupted data transmissions by comparing the check sum of the data transmission intent with the check sum of the received data package;
detecting missing data packages and/or missing data transmission intent messages on basis of missing sequential numbers; and/or
correcting corrupted data based on the error correction code of the data transmission intent message.

Pursuant to a further variant of the invention, the method comprises the step of calculating the first order statistics such as mean and standard deviation of the frequency of data packages and data transmission intents and checks these statistics to detect a safety problem if predefined statistics are not met. This is particularly useful for applications with regular data package transmissions. If the timing between consecutive data packages changes, this might be due to problems on the respective communication link. By calculating first order statistics, the check unit can detect such problems nearly in real time.

In a particularly preferred variant of the invention, the data transmission intent message for each data package to be transmitted are generated on the MAC layer or PHY layer of the transmitting ethernet device. Thus, the generation of the data transmission intent messages is independent of the higher levels of the OSI model, like e.g., the application layer, is automatically performed either on the MAC layer or PHY layer.

According to a variant of the invention, the method further comprises the steps of defining a time interval between sequential data packages and/or sequential data transmission intent messages and checking if the defined time interval is exceeded. In this variant even time issues with respect to at least one communication link can be detected, which is particularly useful for automotive safety critical applications.

The method according to the invention is implemented by an ethernet device according to the invention. Preferably, both ethernet devices of a bi-directional data transfer implement the method according to the invention, but it is sufficient if at least one ethernet implements the method according to the invention.

In the following, the invention will be further explained with respect to preferred embodiments shown in the figures. It shows:
- Fig. 1: a schematic view of a first embodiment a bi-directional data transfer between two ethernet devices according to the present invention, and
- Fig. 2: a schematic view of a second embodiment a bidirectional data transfer between two ethernet devices according to the present invention.

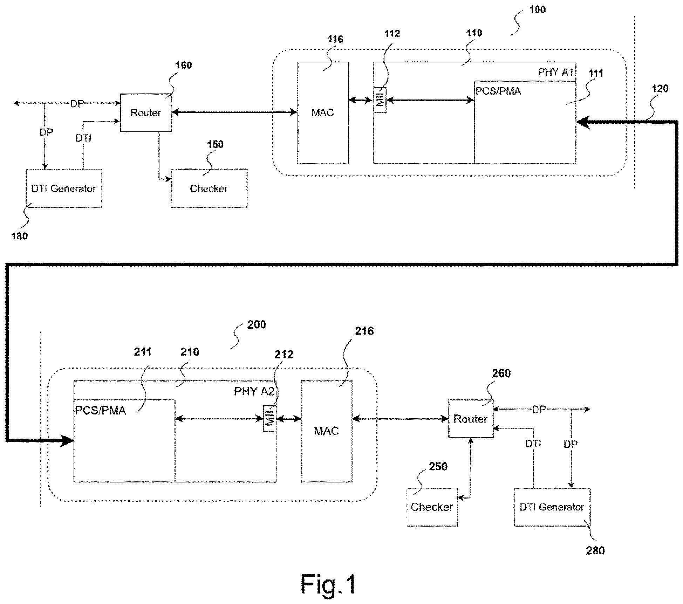

Fig. 1 shows a schematic view of a first embodiment a bi-directional data transfer between a first ethernet device 100 and a second ethernet device 200. The first and second ethernet devices 100, 200 of the first embodiment shown in Fig. 1 each comprise a first ethernet physical layer access device 110, 210; a message generator 180, 280 for generating a data transmission intent message for each data package to be transmitted by the ethernet device 100, 200; and a check unit 150, 250 for comparing received data packages with corresponding data transmission intent messages.

The bi-directional data transfer between the first ethernet device 100 and the second ethernet device 200 is transmitted via a first communication link 120. Particularly, the first and second ethernet devices 100, 200 each transmit and receive data transmission intent messages and the corresponding data packages via the first communication link.

The check unit 150 of the first ethernet device 100 and or the check unit 250 of the second ethernet device 200 detect a safety problem of the first communication link 120 if the data package is received without the corresponding data transmission intent message within a specified time interval or if the data transmission intent message is received without the corresponding data package within the specified time interval.

The first and/or second ethernet device 100, 200 obtain data packages to be transmitted via the first communication link 120. For example, the data packages originate from an external device like safety controller and/or from higher OSI layers like the application layer. The respective ethernet device 100, 200 that obtained the data package generates a data transmission intent message, which relates to the obtained data package. Afterwards, the data transmission intent message and the data package are separately transmitted via the first communication link 120 to the other ethernet device 100, 200. The other ethernet device 100, 200 receives the data transmission intent and/or the data package via the first communication link 120. A safety problem of the first communication link 120 is detected if the data package is received without the corresponding data transmission intent message within a specified time interval or if the data transmission intent message is received without the corresponding data package within the specified time interval.

The first ethernet physical layer access device 110 of the first ethernet device 100 shown in Fig. 1 comprises a first PCS/PMA unit 111 for accessing the first ethernet channel 120, a first media independent interface port 112 for ethernet data package transfer and a first medium access controller 116. Likewise, the second ethernet physical layer access device 210 of the second ethernet device 200 shown in Fig. 1 comprises a first PCS/PMA unit 211 for accessing the first ethernet channel 120, a first media independent interface port 212 for ethernet data package transfer and a first medium access controller 216.

Data packages to be transmitted via the first communication link 120 are received by the message generator 180, 280 of the respective ethernet device 100, 200. The ethernet device 100, 200 can comprise a router 160, 260 to forward either the data package or the data transmission intent message to the physical layer access device 110, 210 of the corresponding ethernet device 100, 200. Thus, the router 160, 260 guarantees that the data package and the data transmission intent message are transmitted separately via the first communication link 120. The router 160, 260 can further forward the received data package to the intended recipient and additionally forwards the received data package and/or the received data transmission intent message to the check unit 150, 250 of the received ethernet device 100, 200.

The data transmission intent message generated by the message generator 180, 280 comprises an identification of the corresponding data package and/or a check sum of the corresponding data package, and optionally a sequential number, an error correction code and/or the full data payload of the corresponding data package. Preferably, the message generator 180, 280 generates the data transmission intent message for each data package to be transmitted by the ethernet device 100, 200 on the MAC layer or PHY layer of the transmitting ethernet device 100, 200.

The check unit 150, 250 can detect corrupted data transmissions by comparing the check sum of the data transmission intent with the check sum of the received data package, detect missing data packages and/or missing data transmission intent messages on basis of missing sequential numbers and/or correct corrupted data based on the error correction code of the data transmission intent message. Preferably, the check unit 150, 250 generates a safety signal for a safety controller using the ethernet device 100, 200 if it detects the safety problem of at least one communication link 120, 140.

In a preferred embodiment, the check unit 150, 250 calculates the first order statistics such as mean and standard deviation of the frequency of data packages and data transmission intents and checks these statistics to detect a safety problem if predefined statistics are not met.

According to another embodiment, the ethernet device 100, 200 further defines a time interval between sequential data packages and/or sequential data transmission intent messages and the check unit 150, 250 can check if the defined time interval is exceeded.

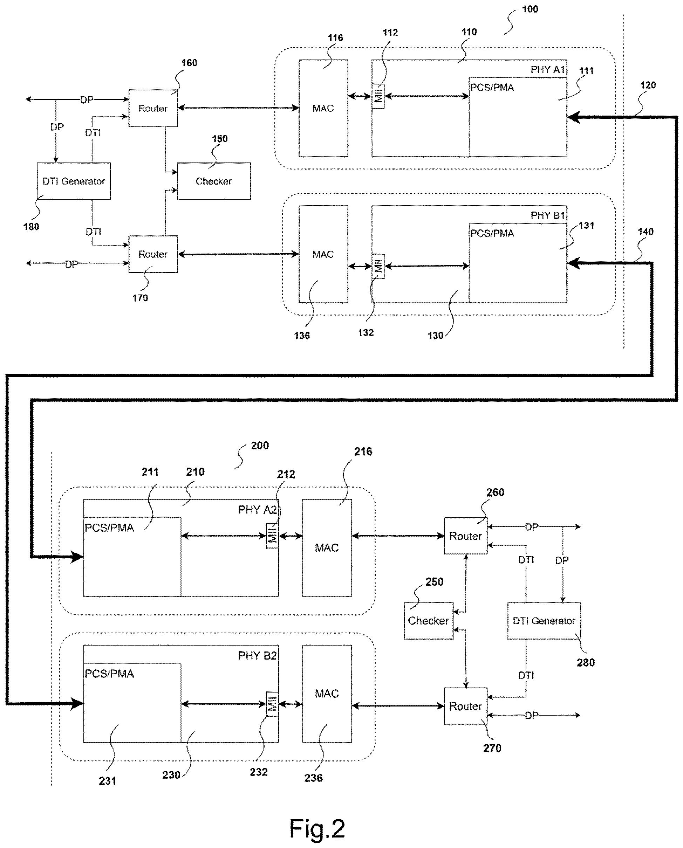

Fig. 2 shows a schematic view of a second embodiment a bi-directional data transfer between two ethernet devices 100, 200 according to the present invention.

The second embodiment of Fig. 2 the first ethernet device 100 and the second ethernet device 200 each comprise a second ethernet physical layer device 130, 230 for sending data via a second communication link 140. Particularly, the respective first ethernet physical layer access devices 110, 210 transmit data via the first communication link 120 and the respective second ethernet physical layer access devices 130, 230 transmit data via a second communication link 140.

The two independent communication links 120, 140 have the advantage that the ethernet devices 100, 200 can transmit the data transmission intent message over either the first communication link 120 or the second communication link 140 and the data package over the other of the first communication link 120 or the second communication link 140. Thus, one of the two communication links 120, 140 is used for the data packages and the other of the two communication links 120, 140 is used for the data transmission intent messages.

If a safety problem is detected by the check unit 150, 250 for either the first or second communication link 120, 140 the respective communication link 120, 140 can be disabled and transmission of at least the data packages can continue over the remaining communication link 120, 140.

The second ethernet physical layer devices 130, 230 of the first and second ethernet device 100, 200 again can each comprise a second PCS/PMA unit 131, 231 for accessing the second ethernet channel 140, a second media independent interface port 132, 232 for ethernet data transmission intent transfer and second medium access controller 136, 236.

Furthermore, the first and second ethernet devices 100, 200 comprise each a second router 170, 270 for routing data packages and/or data transmission intent messages of the second communication link 140 to/from the check unit 150, the intended data package recipient and the message generator 180, 280. The second router 170, 270 is connected to the second communication link 140 via the respective second ethernet physical layer access device 130, 230.

### List of reference numerals

- 100: ethernet device
- 110: first ethernet physical layer access device
- 111: first PCS/PMA unit
- 112: first media independent interface port
- 116: first medium access controller
- 120: first communication link
- 130: second ethernet physical layer access device
- 131: second PCS/PMA unit
- 132: second media independent interface port
- 136: second medium access controller
- 140: second communication link
- 150: check unit
- 160: (first) router
- 170: second router
- 180: message generator
- 200: ethernet device
- 210: first ethernet physical layer access device
- 211: first PCS/PMA unit
- 212: first media independent interface port
- 216: first medium access controller
- 230: second ethernet physical layer access device
- 231: second PCS/PMA unit
- 232: second media independent interface port
- 236: second medium access controller
- 250: check unit
- 260: (first) router
- 270: second router
- 280: message generator

## Claims

1. Ethernet device (100, 200), particularly for reliable communication links in safety critical applications, comprising:
at least a first ethernet physical layer access device (110, 210);
a message generator (180, 280) for generating a data transmission intent message for each data package to be transmitted by the ethernet device (100, 200);
a check unit (150, 250) for comparing received data packages with corresponding data transmission intent messages;
wherein the ethernet device (100, 200) transmits the data transmission intent message and the corresponding data package separately via at least one communication link (120, 140);
wherein the check unit (150, 250) detects a safety problem of the at least one communication link (120, 140) if the data package is received without the corresponding data transmission intent message within a specified time interval or if the data transmission intent message is received without the corresponding data package within the specified time interval.

2. Ethernet device (100, 200), particularly for reliable communication links in safety critical applications, according to claim 1,
further comprising at least a second ethernet physical layer access device (130, 230),
wherein the first ethernet physical layer access device (110, 210) transmits data via a first communication link (120) and the second ethernet physical layer access device (130, 230) transmits data via a second communication link (140),
wherein the ethernet device (100, 200) transmits the data transmission intent message over either the first communication link (120) or the second communication link (140) and the data package over the other of the first communication link (120) or the second communication link (140) .

3. Ethernet device (100, 200), particularly for reliable communication links in safety critical applications, according to any of claims 1 to 2,
wherein the first ethernet physical layer access device (110, 210) comprises:
a first PCS/PMA unit (111, 211) for accessing the first ethernet channel (120);
a first media independent interface port (112, 212) for ethernet data package transfer; and/or
a first medium access controller (116, 216); and/or
wherein the second ethernet physical layer access device (130, 230) comprising:
a second PCS/PMA unit (131, 231) for accessing the second ethernet channel (140);
a second media independent interface port (132, 232) for ethernet data transmission intent transfer; and/or
a second medium access controller (136, 236).

4. Ethernet device (100, 200), particularly for reliable communication links in safety critical applications, according to any of claims 1 to 3,
wherein the data transmission intent message comprises an identification of the corresponding data package and/or a check sum of the corresponding data package, and further optionally comprises a sequential number, an error correction code and/or the full data payload of the corresponding data package.

5. Ethernet device (100, 200), particularly for reliable communication links in safety critical applications, according to claim 4,
wherein the check unit (150, 250) can detect corrupted data transmissions by comparing the check sum of the data transmission intent with the check sum of the received data package, detect missing data packages and/or missing data transmission intent messages on basis of missing sequential numbers and/or correct corrupted data based on the error correction code of the data transmission intent message.

6. Ethernet device (100, 200), particularly for reliable communication links in safety critical applications, according to any of claims 1 to 5,
wherein the message generator (180, 280) generates the data transmission intent message for each data package to be transmitted by the ethernet device (100, 200) on the MAC layer or PHY layer of the transmitting ethernet device (100, 200) .

7. Ethernet device (100, 200), particularly for reliable communication links in safety critical applications, according to any of claims 1 to 6,
wherein the ethernet device (100, 200) further defines a time interval between sequential data packages and/or sequential data transmission intent messages,
wherein the check unit (150, 250) can check if the defined time interval is exceeded.

8. Method for a bi-directional data transfer between two ethernet devices (100, 200), particularly for reliable communication links in safety critical applications, comprising the steps of:
providing a first communication link (120) between the two ethernet devices (100, 200);
obtaining data packages at the ethernet devices (100, 200) to be transmitted via the first communication link (120);
generating a data transmission intent message at the ethernet device (100, 200) that obtained the data package;
separately transmitting the data transmission intent message and the data package via the first communication link (120) to the other ethernet device (100, 200);
receiving at the other ethernet device (100, 200) the data transmission intent and/or the data package via the first communication link (120);
detecting a safety problem of the first communication link (120) if the data package is received without the corresponding data transmission intent message within a specified time interval or if the data transmission intent message is received without the corresponding data package within the specified time interval.

9. Method for a bi-directional data transfer between two ethernet devices (100, 200), particularly for reliable communication links in safety critical applications, according to claim 8, further comprising the steps of:
providing a second communication link (140) between the two ethernet devices (100, 200);
transmitting the data transmission intent message over either the first communication link (120) or the second communication link (140) and the data package over the other of the first communication link (120) or the second communication link (140).

10. Method for a bi-directional data transfer between two ethernet devices (100, 200), particularly for reliable communication links in safety critical applications, according to claim 8 or claim 9, further comprising the steps of:
disabling the first communication link (120) and/or the second communication link (140) if a safety problem of the first communication link (120) and/or the second communication link (140) is detected.

11. Method for a bi-directional data transfer between two ethernet devices (100, 200), particularly for reliable communication links in safety critical applications, according to claim 10, further comprising one or more of the following steps:
detecting corrupted data transmissions by comparing the check sum of the data transmission intent with the check sum of the received data package;
detecting missing data packages and/or missing data transmission intent messages on basis of missing sequential numbers; and/or
correcting corrupted data based on the error correction code of the data transmission intent message.

12. Method for a bi-directional data transfer between two ethernet devices (100, 200), particularly for reliable communication links in safety critical applications, according to any of claims 8 to 11, further comprising the step of:
calculating the first order statistics such as mean and standard deviation of the frequency of data packages and data transmission intents and checks these statistics to detect a safety problem if predefined statistics are not met.

13. Method for a bi-directional data transfer between two ethernet devices (100, 200), particularly for reliable communication links in safety critical applications, according to any of claims 8 to 12,
wherein the data transmission intent message is generated by the respective ethernet device (100, 200) at the MAC layer or PHY layer of the transmitting ethernet device (100, 200) .

14. Method for a bi-directional data transfer between two ethernet devices (100, 200), particularly for reliable communication links in safety critical applications, according to any of claims 8 to 13, further comprising the step of:
generating a safety signal for a safety controller using the ethernet device (100, 200) if it detects the safety problem of at least one communication link (120, 140).

15. Method for a bi-directional data transfer between two ethernet devices (100, 200), particularly for reliable communication links in safety critical applications, according to any of claims 8 to 14, further comprising the step of:
defining a time interval between sequential data packages and/or sequential data transmission intent messages,
checking if the defined time interval is exceeded.
